# EUROPEAN PATENT APPLICATION

(11) **EP 3 879 749 A1**
(43) Date of publication of application: **15.09.2021**
(21) Application number: 20380013.1
(22) Date of filing: 13.03.2020
(51) Int. Cl.: H04L 9/08, H04L 9/32

(54) **METHOD AND SYSTEM FOR AUTOMATICALLY GENERATING AND MANAGING RAILWAY KEYS**

(71) Applicant: Siemens Rail Automation S.A.U., 28760 Tres Cantos (Madrid) (ES)
(72) Inventor: Colina Marin, Arturo, E-28003 Madrid (ES); Diaz Ortiz, Antonio, E-28806 Alcalá de Henares (Madrid) (ES); Benitez LEO, Julian, E-28043 Madrid (ES)
(74) Representative: Deffner, Rolf

(57) **Abstract**

The present invention concerns a method and system for generating and managing railway keys for one or several railway operators, wherein said railway keys are used for authenticating communications between devices within a railway network (21, 22, 23) of the railway operator, the system comprising:
- a blockchain network (1) configured for acquiring an operator key generation rule for a railway operator and for automatically generating for at least one of said two devices of the railway network (21, 22, 23) a transaction for a railway key from the acquired operator key generation rule, wherein said blockchain network (1) is further configured for validating each of the generated transactions and for writing onto a blockchain of the blockchain network (1) each validated transaction;
- a dispatch system (16) of the blockchain network (1) configured for automatically communicating each transaction that has been written onto the blockchain to at least one device, preferentially to a Key Management Center - hereafter KMC - (211, 221, 231), of the railway network (21, 22, 23) of the railway operator for which the transaction has been generated.

## Description

The present invention concerns a system and a method for automatically generating and managing railway keys.

The present invention is essentially related to the field of guided vehicle, wherein the expression "guided vehicle" refers to public transport means such as subways, trains or train subunits, etc., as well as load transporting means such as, for example, freight trains, for which safety is a very important factor and which are guided along a route or railway by at least one rail, in particular by two rails. More specifically, the present invention concerns safety aspects with respect to a railway network comprising such guided vehicles and focuses on railway cryptographic keys, which are designed for securing communications within a railway network.

Indeed, railway cryptographic keys are part of a cryptosystem used for authenticating messages exchanged within the railway network, e.g. usually between a guided vehicle (e.g. an on-board unit (OBU)) and a trackside equipment (e.g. a radio block center (RBC)), or between two guided vehicles, or between a guided vehicle and a control center, or between two trackside equipment. It is important to ensure that a message comes from an authorized sender and is received by the right and authorized recipient. The keys have also a finite period of validity, and therefore, they need to be replaced or updated at the end of their validity period, before being outdated. Usually, a Key Management Center (KMC) is in charge of the management of the keys for a specific railway network (e.g. a geographical network) managed by a railway company. The KMC is configured for generating and distributing the keys. KMCs are typically proprietary solutions developed by different companies for specific railway operators/companies, each of said specific railway operators/companies having therefore usually at least one KMC for managing keys of its railway network.

The replacement, update, or deployment of keys is problematic, because it is a very complex and time-consuming procedure. For instance, generating new keys and deploying them involves different equipment and human procedures that need to satisfy confidentiality requirements to maintain safety. The transfer of newly generated railway keys to the different actors/devices which will deal with these keys is thus very complex and critical with respect to safety, and may require a specific validation of the keys. For instance, current procedures usually require safety personnel of the railway management company to generate new keys (e.g. each pair of keys enabling a safe communication between a pair of devices, each device of said pair receiving its own key), a physical transmission of the new keys from the railway management company to each railway operator in charge of ensuring the safety of the railway network, and maintenance personnel of the railway operator and/or of the management company to physically travel to each trackside equipment/guided vehicle which requires a manual replacement/update/storing of the new key. Due to its complexity, it happens that the period of validity of some keys is extended indefinitely in order to avoid any periodical renewal of the key, which may result in a security issue.

An objective of the present invention is to propose a method and system for improving the management of railway keys while keeping a high degree of security.

For achieving said objective, the present invention proposes notably a system and method for generating and managing railway keys as disclosed by the objects of the independent claims. Other advantages of the invention are presented in the dependent claims.

The present invention concerns notably a method for generating and managing railway keys for one or several railway operators, wherein each railway key is configured for authenticating communications between at least two devices within a railway network of a railway operator, each of the two devices typically comprising at least one key for authenticating its communications with the other device, the method comprising the following steps:
- acquiring, preferentially automatically, one or several operator key generation rules for at least one, preferentially each, railway operator;
- for at least one of said railway operators, preferentially for each of said railway operators, automatically generating, by one or several computing devices of a blockchain network, a transaction for a railway key for at least one of said two devices of the railway network, wherein said transaction is generated by said one or several computing devices from the operator key generation rules, wherein each of said one or several computing devices represents or is a node of said blockchain network. Said transaction concerns for instance a generation of a railway key and the corresponding generated key, or an update of a railway key and the corresponding updated key, or a deletion of a key and the concerned deleted key;

- automatically validating, preferentially through consensus rules, the transaction within the blockchain network and registering (i.e. writing) on a block of said blockchain network the validated transaction;
- for each railway operator for which a transaction has been registered on a block of the blockchain, automatically communicating said transaction to at least one device of the railway network of the railway operator. Preferentially, said transaction is distributed to a KMC of the railway operator, wherein said KMC is preferentially part of the blockchain network. Preferentially, the system according to the invention automatically updates the blockchain of the KMC with the newly registered transaction, and/or notifies the KMC about any transaction concerning the railway network it belongs to.

The present invention proposes also a system for generating and managing railway keys for one or several railway operators, the system according to the invention comprising:
- one or several computing devices of a blockchain network configured for enabling an acquisition of key generation rules for at least one, preferentially each, of said railway operator and for automatically generating for at least one, preferentially each, of said railway operators one or several transactions for a railway key, wherein each of said one or several computing devices is a node of said blockchain network, the latter being further configured for automatically validating and registering on a blockchain each of said transaction for a railway key;
- a dispatch system of said blockchain network, said dispatch system being configured for automatically communicating each transaction that has been written onto the blockchain to at least one device of the railway network of the railway operator, said device being preferentially a KMC of the railway operator, so that said device becomes informed about said transaction.

Further aspects of the present invention will be better understood through the following drawings, wherein like numerals are used for like and corresponding parts:
- Figure 1: schematic representation of a system according to the invention.
- Figure 2: flowchart of a preferred method according to the invention.

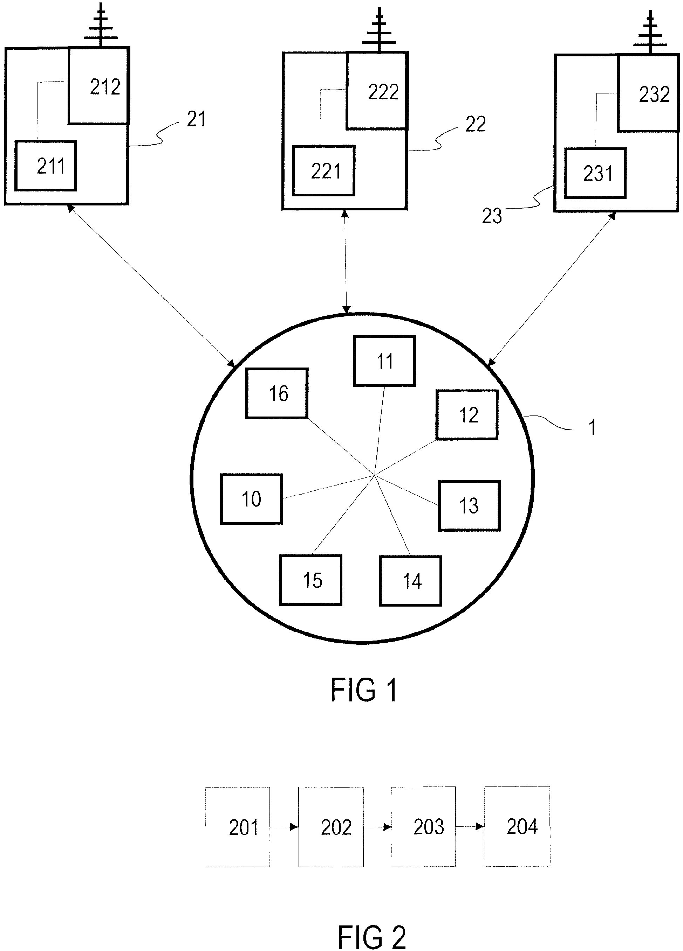

Figure 1 illustrates a preferred embodiment of a system 1 for generating and managing railway keys for one or several railway operators according to the invention.

Figure 1 shows a preferred embodiment of a blockchain-based key management comprising the generation, update, and distribution of railway keys, as well as their deletion. A blockchain network 1, i.e. a distributed and encrypted database, is used for railway key management. The blockchain is known as a public or private ledger of all transactions that have occurred in the network. Preferentially, for each new transaction, such as a railway key generation, update, or deletion, a new block is added to the blockchain database in a linear and chronological order, wherein the database is distributed and redundant, i.e. many blockchain elements, e.g. the nodes 10-15, comprise a copy of the blockchain database. Each of said nodes 10-15 is for instance a computing device of a private network, wherein the computing devices are interconnected to each other in order to create/form said blockchain network 1. According to the present invention, the nodes 10-15, and optionally node 16, are preferentially full nodes of the blockchain network 1: these nodes are configured for checking every transaction and block of the blockchain against network's consensus rules. Such full nodes are therefore configured for validating each transaction received and for adding the validated transaction to a block of the blockchain. Each full node comprises notably a copy of the entire blockchain, so that each transaction and block that has been registered within the blockchain is known by the full node and can be downloaded. The consensus rules are block validation rules followed by the full nodes to stay in consensus with each other. Known in the art consensus algorithm are used for reaching or finding a consensus in the blockchain, i.e. making the full nodes agree with each other on the validity of a transaction.

Different railway operators have each at least one railway network 21, 22, 23 comprising equipment or devices, such as trackside systems, guided vehicle on-board devices, control center, that have to communicate with each other using authentication keys or railway keys. The different equipment or devices might interconnect to each other in order to form a network enabling digital communication and the sharing of information and/or resources. Said devices/equipment are notably involved in the management of the traffic of guided vehicles over the operator railway network 21, 22, 23. The railway keys are cryptographic keys used for authenticating messages exchanged between the different equipment/devices of the railway network 21, 22, 23, e.g. between a trackside system and a guided vehicle. Each railway network 21, 22, 23 comprises a KMC 211, 221, 231 in charge of managing the cryptographic keys. According to the present invention, each KMC 211, 221, 231, is connected to the blockchain network 1, for instance by means of a communication system 212, 222, 232, so that registered transactions, concerning for instance a generated railway key, an updated railway key or a deletion of a railway key, might be sent by the blockchain network 1 directly to each of the KMC 211, 221, 231. At least one device of each of the railway network 21, 22, 23 is a lightweight node. Preferentially, the KMC 211, 221, and 231 are each a lightweight node. Preferentially each device of the railway network of the different railway operators are lightweight nodes. Preferentially, all transactions registered within the blockchain network are communicated to said lightweight nodes, preferentially according to known blockchain techniques. The lightweight node is configured for verifying transactions using preferentially a method called simplified payment verification (SPV). SPV allows the lightweight node to verify if a transaction has been included in a block, without having to download the entire blockchain. With SPV, full nodes serve lightweight nodes by allowing the lightweight nodes to connect to the blockchain network so that transactions (e.g. newly written transaction concerning the railway network of the lightweight node) are transmitted to the railway network of the lightweight node, the full nodes being preferentially further configured for notifying a lightweight node when the latter is affected by a transaction that has been written (e.g. newly written) on a block.

The blockchain according to the invention comprises a plurality of blocks, each block recording preferentially one transaction, or at least one transaction, each transaction being associated to a railway key, such as its generation or its update or its deletion. For this purpose of railway key generation and management, each block preferentially comprises a key section configured for recording a transaction with respect to a generated or updated or deleted railway key, the block further comprising preferentially additional information, like the rule that has been used for said generation or update or deletion, and optionally a timestamp and/or an identification of the recipient of the generated or updated or deleted key (e.g. said identification identifying the railway operator and the equipment/device that will use the key), and/or an identification of the last block in the chain.

Figure 2 illustrates a preferred embodiment of the method for generating and managing railway keys for one or several railway operators according to the invention. The method comprises preferentially the following steps with respect to the system illustrated in Fig. 1:
At step 201, the blockchain network 1 receives or acquires, for a railway operator, notably for each railway operator connected to the system according to the invention, at least one key generation rule. Said key generation rule might be sent by a user in charge of the management of the keys of the railway network for an operator, using for instance an electronic form, or might be automatically uploaded in the blockchain network by a rule uploader system of the blockchain network 1 or might be automatically sent by a key management system of the operator railway network, for instance by the KMC 211, 221, 231. The rule might be a configuration file. Preferably, the rule defines a frequency for updating a key (e.g. an update frequency defined by the rule might be 1 day, 5 days, 1 month, etc.), and/or provides a pair definition, i.e. an identification of the devices (typically a pair of devices) that will use the key for their communication, and/or a key generation algorithm for the generation of the key (e.g. a cryptographic algorithm), etc. The rule comprises and/or defines all required information for the automatic management of a railway key, comprising its generation, its updating and/or its deletion. The rule might also additionally list all guided vehicles that can be moved from one line to another line, and thus from one set of trackside systems to another one, so that respective keys for authenticating the communication with the sets of trackside systems are accordingly transferred to such guided vehicles, and/or define the recipient(s) of each key (e.g. the maintenance operator and/or a railway company manager, etc.), and/or might define different user authorizations with respect to the management and generation of the keys (e.g. a list of users entitled to access the KMC platform and a role and/or authorization of each of said users). After reception of said rule, the system according to the invention preferentially automatically writes (i.e. records) the rule in a node of the blockchain network, preferentially in a full node of the blockchain network, or in a set of predefined nodes of the blockchain network. Advantageously, the acquisition of said rule by the system according to the invention enables each railway operator to provide to the system specific rule(s) for generating, updating, or deleting keys. These rules are used by the system according to the invention as configuration rules for an automatic generation, update, or deletion of a railway key, notably upon reception of a request e.g. sent by a system in charge of the management of the railway keys (e.g. a KMC), wherein said request is introduced in the blockchain network by filling/creating a transaction to be validated by the blockchain network. Said rules are different from the consensus rules in the blockchain network.

At step 202, the blockchain network is configured for automatically generating, from the received or acquired rule for one of said railway operators, a transaction for a railway key for said one of said railway operators. Preferentially, any node of the blockchain network might be configured for generating said transaction from said rules, as long as said node has access to the rules. For instance, one node of said blockchain network, preferably a full node, wherein the rule has been stored, is configured for automatically determining from said rule whether the latter requires or requests an action with respect to a railway key of said railway operator, wherein said action is notably a generation of a new key, or an update of an existing key, or a deletion of an existing key. If such action is requested/required by the rule for a railway key, then said node automatically generates a transaction for said railway key: if the node determines from the rule that a railway key has to be generated, updated, or deleted, then it uses said rule for generating a new key, updating an existing key, or creating an order for deleting an existing key, and fills or creates a transaction within the blockchain network, wherein said transaction comprises the generated new key, updated existing key, or created order for deleting an existing key. Optionally or alternatively, the blockchain network 1 may also receive a request from a system in charge of the management of the railway keys for the railway network, e.g. from one of said KMC 211, 221, 231, for a generation or update or deletion of a key. Then, as explained before, a node of the blockchain network, preferably a full node, generates a new key or updates an existing key or creates an order for deleting an existing key from (i.e. by applying) the rules, and fills or creates a transaction within the blockchain network, wherein said transaction comprises the generated new key, updated existing key, or created order for deleting an existing key.

At step 203, the blockchain network 1 is then configured for validating the transaction using consensus rules and for writing said transaction onto a block of the blockchain. For creating the transaction, the blockchain network 1 is thus configured for determining from the key generation rule defined for the railway operator whether a new key (the new key might be a key that will replace an existing key (i.e. an update) within a device or a key that does not replace an existing key within a device, but that is a key which is for the first time created for said device which did not receive any key before) has to be generated (because for instance of an update frequency of the key) and, in the affirmative, for generating the new key and a transaction within the blockchain network, wherein said transaction comprises the new key (or, in case of a deletion, an order for deleting an existing key). Optionally, the blockchain network may determine whether a cryptographic proof of identity for a railway operator requesting a new key is satisfied. Once the transaction is generated within the blockchain network, it is distributed within the nodes of the blockchain network, preferably within the full nodes, and the blockchain network uses a consensus algorithm (consensus rules) for validating the transaction.

According to the present invention, each validated transaction is written onto a block of the blockchain network 1. Consequently, each transaction is registered in a block of the blockchain. In particular, the nodes of the blockchain network comprise key generators, preferably based on COTS, and which are configured for generating railway keys from key generation algorithm (e.g. cryptographic algorithm) defined or comprised in said rule.

At step 204, the blockchain network 1 automatically informs at least one device, e.g. a lightweight node, preferably a KMC, of the railway network of a railway operator about a transaction that concerns said railway network (i.e. that concerns at least one device of said railway network). Preferentially, in order to inform said at least one device, the blockchain network may update the blockchain of a lightweight node with the registered transaction. Preferentially, a dispatch system 16 of said blockchain network is configured for automatically transmitting to the KMC 211, 221, 231 of the railway operator each of the registered transactions that have been generated for said railway operator. The dispatch system 16 is preferentially a full node of the blockchain network. The device informed about said transaction, e.g. the KMC, then automatically implements the transaction, for instance by storing a newly generated or updated key in the appropriate device, or by deleting an existing key if the transaction comprises an order for deleting the existing key.

To summarize, the present invention provides a new way of generating and managing railway keys within a blockchain framework which guarantees the security of the keys by consensus with the blockchain network and redundancy within the multiple nodes of said blockchain network.

## Claims

1. System for generating and managing railway keys for one or several railway operators, wherein the railway key is used for authenticating communications between at least two devices within a railway network (21, 22, 23) of the railway operator, the system comprising:
- a blockchain network (1) configured for acquiring an operator key generation rule for a railway operator and for automatically generating for at least one of said two devices of the railway network (21, 22, 23) a transaction for a railway key from the acquired operator key generation rule, wherein said blockchain network (1) is further configured for validating each of the generated transactions and for writing onto a blockchain of the blockchain network (1) each validated transaction;
- a dispatch system (16) of the blockchain network (1) configured for automatically communicating each transaction that has been written onto the blockchain to at least one device, preferentially to a Key Management Center - hereafter KMC - (211, 221, 231), of the railway network (21, 22, 23) of the railway operator for which the transaction has been generated.

2. System according to claim 1, wherein the blockchain comprises a plurality of blocks, each block being configured for recording a transaction, each transaction being associated to a railway key.

3. System according to claim 1 or 2, wherein the blockchain network is connected to a computer network of the railway network (21, 22, 23) of each railway operator and configured for automatically uploading the key generation rule from said computer network (21, 22, 23).

4. System according to one of the claims 1 to 3, wherein said key generation rule comprises a key generation algorithm.

5. System according to claim 4, wherein nodes of the blockchain network (1) are computing devices including key generators.

6. System according to one of the previous claims, wherein the transaction is related at least to one of the following actions:
- a generation of a railway key, the transaction comprising the generated key, or
- an update of a railway key, the transaction comprising the updated key, or
- a deletion of a railway key, the transaction comprising an order for deleting the railway key.

7. Method for generating and managing railway keys for one or several railway operators, wherein said railway keys are used for authenticating communications between two devices within a railway network (21, 22, 23) of the railway operator, the method comprising the steps:
- acquiring (201) an operator key generation rule for a railway operator;
- automatically generating (202), by a blockchain network (1) and for at least one of said two devices of the railway network (21, 22, 23) of the railway operator, a transaction for a railway key from the acquired operator key generation rule;
- automatically validating (203) the transaction within the blockchain network (1) and writing onto a blockchain of said blockchain network (1) the validated transaction;
- for each railway operator for which a transaction has been written onto the blockchain, automatically communicating (204) the registered transaction to at least one device of the railway network of the railway operator, preferentially to a KMC (211, 221, 231) of the railway network (21, 22, 23) of the railway operator, for which the transaction has been generated.

8. Method according to claim 7, wherein automatically generating the transaction for a railway key for a railway network operator comprises:
- the blockchain network (1) receiving a request for updating, generating, or deleting a railway key notably from a system in charge of the management of railway keys for the railway network (21, 22, 23);
- the blockchain network (1) automatically filling or creating a transaction from at least one key generation rule acquired for said railway network operator.

9. Method according to claim 7 or 8, wherein the key generation rule is automatically uploaded within the blockchain network (1) by a rule uploader system of said blockchain network (1).

10. Method according to one of the claims 7 to 9, wherein the transaction is related at least to one of the following actions:
- a generation of a railway key, the transaction comprising the generated key, or
- an update of a railway key, the transaction comprising the updated key, or
- a deletion of a railway key, the transaction comprising an order for deleting the railway key.
